# EUROPEAN PATENT APPLICATION

(11) **EP 4 016 141 A1**
(43) Date of publication of application: **22.06.2022**
(21) Application number: 20383093.0
(22) Date of filing: 15.12.2020
(51) Int. Cl.: G02B 1/118, G02B 1/115, G02B 1/18

(54) **ANTIREFLECTIVE MULTILAYER ARTICLE WITH NANOSTRUCTURES**

(71) Applicant: Fundació Institut de Ciències Fotòniques, 08860 Castelldefels (Barcelona) (ES); Institució Catalana De Recerca I Estudis Avançats (ICREA), 08010 Barcelona (ES); Corning Incorporated, Corning, New York 14831 (US)
(72) Inventor: PRUNERI, Valerio, 08860 CASTELLDEFELS (BARCELONA) (ES); ROMBAUT SEGARRA, Juan, 08860 CASTELLDEFELS (BARCELONA) (ES); MAZUMDER, Prantik, NEW YORK, NY New York 14831 (US)
(74) Representative: Herrero & Asociados, S.L.

(57) **Abstract**

The present invention relates to antireflective multilayer article with self- cleaning nanostructures and to process to obtain it. The antireflective multilayer of the invention is particularly useful for photovoltaic cells, laser device, display screens and light detection and ranging (LIDAR) system.

## Description

The present invention relates to an antireflective multilayer article with self- cleaning nanostructures and to the process to obtain it.

The antireflective multilayer with nanostructures of the invention is particularly useful for photovoltaic cells, laser device, display screens and light detection and ranging (LIDAR) system.

### BACKGROUND ART

The suppression of optical reflection from a surface is essential in many applications, ranging from displays with reduced disturbance from ambient light to high efficiency photovoltaic cells and stable light detection and ranging (LIDAR) systems.

Traditionally, antireflection (AR) surfaces are made of multilayer (ML) coatings that produce destructive interference of light beams reflected from each interface.

For example, in the patent application EP1255130 is described a transparent substrate with a multilayer antireflection layer having electrical conductivity. On a polycarbonate substrate, a first SiO₂ layer is formed. A second TiO₂ layer is formed on the first layer. Finally, a third indium tin oxide is formed on the second layer.

The antireflection multilayer surfaces are built on a stack of thin layers of different refractive indices which reduces effective reflection due to destructive interference of the multiple wave fronts reflected at each interface. By tuning the number, thicknesses and the optical properties (or choice of materials) it is possible to optimize the AR-ML for specific spectral regions. Due to the resonance nature of the interference, however, the response tends to be narrowband in wavelength and in angle of incidence. Use of varying thicknesses (i.e. chirped) or graded index ML structure may extend the AR bandwidth but at the expense of minimum reflectivity achievable.

More advanced AR surfaces are based on biomimetic nanostructures (NS) that rely on a gradation of refractive index to suppress reflection. While AR-ML coatings tend to work for restricted wavelengths of light and angles of incidence, AR-NS can be broadband and omnidirectional. In addition, compared to AR-ML they can offer higher superhydrophobic and self-cleaning properties when a thin coating of low surface free energy (e.g. polymer self-assembly monolayer based on fluorosilane) is applied (Nano Research, volume 6, pages 429-440 (2013)). Unfortunately, AR-NS often suffer from mechanical failure, this being more critical for deeper or high aspect ratio (height/diameter) structures required for achieving AR at longer wavelengths.

The European patent application EP2375452A describes a thin-layer broadband AR layer for use with an optical element or an optoelectronic device, wherein the thin-layer broadband AR layer comprises: at least a thin-layer dielectric layer; and, at least one array of nanoparticles disposed onto or in said thin-layer dielectric layer, wherein the dielectric constant of said nanoparticles is substantially distinct from the dielectric constant of said dielectric layer. If more than a thin dielectric layer is used, e.g. two layers, the refractive index difference between these two layers is typically already large to achieve good AR properties due to interference caused by such layers. Finding a particle material with a substantially distinct dielectric constant (i.e. refractive index) from the layers materials thus limits the choice of particle material. A large refractive index mismatch between dielectric layer and nanoparticles can also cause unwanted reflections that lead to transmission losses and optical interference. In addition, to have substantially distinct optical properties the nanoparticle material may substantially differ in physical, chemical or mechanical properties from that of the layer underneath, this causing potential interface issues, such as mechanical stress and thus hindering mechanical durability of the combined layer-nanoparticle surface.

The nanostructure limitations become even more daunting at higher operating wavelengths. The height of the nanostructures, especially when used on their own, needs to increase to maintain the AR properties at longer wavelengths, which makes the aspect ratio (height/diameter) higher which, in turn, makes their fabrication more demanding and renders them more vulnerable to mechanical damage.

Thus, from what is known in the art, it is derived that the development of an antireflective material, with improved feature and broadband.

### SUMMARY OF THE INVENTION

Antireflection (AR) surfaces are essential elements in many applications. For example, in lasers they enable loss reduction of intracavity elements, in LIDAR they increase signal stability, in display screens they reduce dazzling effects of environmental light and in photovoltaic cells they increase the light intensity reaching the active layers.

Inventors have found an AR surface comprising multilayer and nanostructures with several crucial advantages, including greater spectral and angular bandwidth and water repellence compared to only AR-ML, easier fabrication and higher mechanical durability.

Other advantage is that the AR surface of the invention operates in the visible (VIS) between 400 to 700 nm and especially at longer wavelengths in the near infrared (NIR) between 750 nm to 2600 nm where application such as LIDAR for autonomous vehicles are of high interest.

The article of the present invention comprises a multilayer (ML) and nanostructures (NS) on the top. The refractive index of the material of the nanostructure is similar to the refractive index of the material layers of the multilayer.

Therefore, an aspect of the present invention relates to an AR-ML article with NS on the top layer wherein the article comprising a substrate, at least two layers with different refractive indices material deposited on top of one another and wherein the NS have a refractive index material equal to any of the refractive index material layers of the multilayer +/- 10%.

Another aspect of the invention relates to a process for the preparation of the AR-ML article with NS that comprises:
a) providing a primary substrate;
b) forming at least two layers with different refractive indices deposited on top of one another by sputtering deposition to obtain a ML article;
c) providing a pattern of NS on the top layer.

Finally, the last aspect of the invention is the use of the antireflective multilayer article with nanostructures for photovoltaic cells, laser device, display screens and light detection and ranging (LIDAR) system.

### BRIEF DESCRIPTION OF THE DRAWINGS

FIG. 1 shows a comparison of antireflection (AR) effect between multilayer article, without (AR-ML) and with (AR-ML-NS) nanopillars as a function of angle of incidence (AOI): visible (VIS) (a) and (b) and near infrared (NIR) (c) and (d). All simulations refer to only one substrate surface, i.e. the back surface is placed at an infinite distance as if it had zero reflectivity.

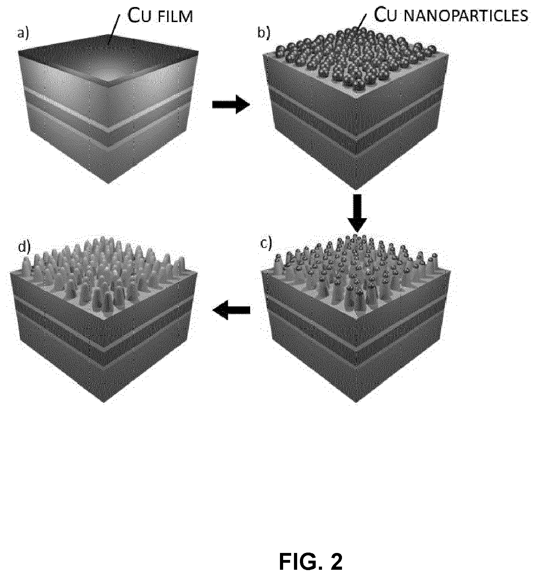

FIG. 2 shows a schematic drawing of the process of the invention.
FIG. 3 shows optical comparison, transmission and reflection at normal incidence, between antireflective multilayer (AR-ML) and antireflective multilayer with nanostructures (AR-ML-NS).

### DETAILED DESCRIPTION OF THE INVENTION

As mentioned above an aspect of the present invention relates to an antireflective multilayer article with nanostructures on the top layer wherein the article comprising a substrate, at least two layers of materials with different refractive indices deposited on top of one another and wherein the material of the nanostructures have a refractive index equal to refractive index of any of the material layers of the multilayer +/- 10%.

Preferably the material of the nanostructures have a refractive index equal to refractive index of the top layer material +/- 10%.

In an embodiment the materials of the nanostructures have a refractive index equal to the refractive index of any of the material layers of the multilayer.

Preferably the substrate is selected from: glass, ceramics, polymer or semiconductor material. Preferably the material of the layer and the material of the nanostructure is selected from: SiO₂, MgF₂, ZrF₄, ZrO₂, TiO₂, SnO₂, thermally and ultraviolet curable polymers, polyimide and poly(methyl methacrylate) (PMMA). More preferably the material of the layer is selected from of SiO₂ and TiO₂. Preferably the number of layers is selected from 2, 3, 4, 5, 6 and have a thickness in between 10 nm and 1000 nm.

In an embodiment the nanostructures are made of glass or ceramics or polymer materials.

Preferably the top layer of the article and the nanostructures are monolithic.

It is expected, the effect of the NS on the AR-ML is larger in the VIS range. Deep structures would lead to comparable benefit in the NIR range but could lead to mechanical durability issues. Therefore, the preferable height of the nanostructures is between 1nm to 300nm. More preferably between from 1 to 150 nm.

The nanostructure can show different shapes preferably selected from: spherical, conical, spiral, cylindrical, tubular, flat, pillar, hollow, or irregular.

Particularly the nanostructures are nanopillars, nanoholes or nanoparticles.

In one embodiment the nanostructures are nanopillars monolithically fabricated on the last layer of ML. Preferably the nanopillar density is between 30 nanopillars per micron square to 70 nanopillars per micron square. Preferably 50 nanopillar per micron square.

The nanopillar dimensions must be subwavelength to avoid scattering and their height is a compromise between adequate superhydrophobicity and mechanically durability. Also, the initial thickness of the last layer of the AR-ML-NS is larger than that of the AR-ML structure to take into account the subsequent NS.

Particularly the geometrical parameters of the nanopillars are height (150nm), apex diameter (50nm) and base diameter (60nm).

Besides AR, superhydrophobicity is another attribute that is often desired, as it promotes self-cleaning behaviour. It is thus technologically relevant to search for AR and superhydrophobic surfaces capable of meeting optical and mechanical durability requirements optimized for specific applications. Surfaces can be artificially engineered through physical nano-structuring and chemical functionalization to achieve superhydrophobicity (SH) and self-cleaning properties.

Preferably the NS are covered or made with a low surface free energy (SFE) coating.

By coating the artificially fabricated NS with low surface energy molecules, such as self-assembled monolayer (SAM) of a fluoropolymer or an alkylsilane, large contact angle and small sliding angle for water can be obtained. Preferably the fluorosilane or alkylsilane has a C-C chain of 2 to 20 carbon atoms.

When a polymer material is used to create the NS and such polymer has a low SFE there is no need to apply a low SFE coating to the NS.

In various embodiments, the superhydrophobic materials can comprise a contact angle in air of at least 110°, 120°, 130°, 140°, 150°, or 160° as measured by a contact angle goniometer as described in ASTM D7334-08. In certain embodiments, the superhydrophobic materials can comprise a contact angle in air that is greater than or equal to 150° as measured by a contact angle goniometer as described in ASTM D7334-08.
In an embodiment the nanostructures are covered with a low surface free energy, Υ ≤ 40 dynes/cm, preferably Υ ≤ 20 dynes/cm.

As mentioned above, an aspect of the present invention relates to a process for the preparation of the antireflective multilayer article with nanostructures that comprises:
a) providing a primary substrate;
b) forming at least two layers with different refractive indices deposited on top of one another by sputtering depositionto obtain a multilayer article;
c) providing a pattern of nanostructures on the top layer.

In a preferred embodiment after the step c) there is a step d) of applying a fluorosilane or an alkylsilane coating.

In a preferred embodiment the top layer of the article and the nanostructures are monolithically integrated. When the top layer of the article and the nanostructures are monolithic the step c) is carried out by depositing on the top of the multilayer article obtained in step b) a metal layer; generating metal nanoparticles as an etching mask, in the metal layer deposited by means of thermal annealing process (RTA); dry etching the metal nanoparticles to generate the nanostructures and chemically removing the residual mask of metal.

It is possible to tune the density and size of the nanoparticles by adjusting the metal layer of step c), the temperature and the time of the RTA process. The etching time determines the nanostructures heights.

Preferably the NS are prepared using large scale lithography-free methods like metal dewetting followed by etching (Nano Research volume 6, pages 429-440 (2013); ACS Appl. Mater. Interfaces 2018, 10, 49, 43230-43235; ACS Omega 2019, 4, 22, 19840-19846) or nano-imprint (Journal of Vacuum Science & Technology B 33, 060801 (2015)).

Another embodiment of the invention relates to a process where the NS is formed of nanopillars (Nano Research volume 6, pages429-440 (2013)) or nanoholes (ACS Appl. Mater. Interfaces 2018, 10, 49, 43230-43235; ACS Omega 2019, 4, 22, 19840-19846).

### EXAMPLE

The following examples are provided for illustrative means and are not meant to be limiting of the present invention.

### Example 1

### Methods

### Fabrication of Antireflective Multilayer (AR-ML) article:

Double-side, optically polished, ultraviolet-grade fused silica (FS) glass, with a thickness of 1mm and an area of 1-inch square, were used as substrates. The surfaces were cleaned in acetone followed by ethanol in an ultrasonic bath for 10min each. The substrates were then rinsed in deionized water and dried with nitrogen followed by oxygen plasma cleaning (PVA TePla 300 SemiAuto Plasma Asher) for 10min with 300ml/min of O₂ and 700W of power. For the SiO₂ layers, the sputtering deposition was performed at a base pressure of 10⁻⁸ Torr, room temperature, 175W of RF-power, 20 standard cubic centimetres per minute (sccm) of pure argon (Ar) and 2 sccm of oxygen to maintain the stoichiometry of the target material deposited on the substrate. The working pressure was 1.5x10⁻³ Torr, the deposition rate was 0.012nm/s, and the target-substrate distance was 35cm. For the TiO₂ layers, the deposition was performed at a base pressure of 10⁻⁸ Torr, room temperature, 175W of RF-power, 20 sccm of pure Ar and 0.4 sccm of oxygen to maintain the stoichiometry of the target material deposited on the substrates. The working pressure was 1.5x10⁻³ Torr, the deposition rate was 0.018nm/s, and the target-substrate distance was 35cm. By varying the time of deposition, it is possible to adjust the thickness of each layer according to the desired design.

### Antirelfective Multilayer + Nanostructures (AR-ML-NS) article:

The AR-ML samples were cleaned in acetone followed by ethanol in an ultrasonic bath for 10min each. Then, rinsed in deionized water and dried with nitrogen followed by oxygen plasma cleaning for 10min with 300ml/min of O2 and 700W of power. Using the same sputtering process as for the multilayer fabrication, additional SiO₂ was deposited to increase the thickness of last layer. An ultra-thin layer of copper (Cu) with a thickness of 6nm was deposited by sputtering on top of the multilayer. The deposition was performed at a base pressure of 10⁻⁸ Torr, room temperature, 100W of DC-power, and 25 sccm of pure Ar. The working pressure was 1.5x10⁻³ Torr, the deposition rate was 0.166nm/s, and the target-substrate distance was 40cm. In order to create the nanostructure, the samples were subjected to a rapid thermal annealing process (RTA). Dewetting takes place because the surface energy of the ultrathin metal layer is greater than the interfacial and surface energy of the underlying substrate when thermally heated, so the metal layer reduced its surface area by self-collecting into small islands on the surface. Before RTA, the samples were blown with a N₂ gun to ensure that the surface was completely clear of small dust particles and pollutants that could alter the dewetting process. The RTA was carried out in the TsunamiTM RTP-600S system at a temperature of 600°C for 450s. It is possible to tune the density and size of the nanoparticles by adjusting the Cu initial layer, the temperature and the time of the RTA process. The nanoparticles created by dewetting were used as an etching mask. Dry etching of the samples was performed by Plasmalab System 100 (Oxford Instruments) with 300W RF power (850 DCV) at 10mTorr in 40 sccm Ar/5 sccm CHF₃ plasma. The etching time determines the pillar heights. Afterwards, the residual mask of Cu was chemically removed with ammonium persulfate.

In Table 1 is showed the scheme of the AR-ML-NS design, consisting of NS on top of ML article, on fused silica substrate.

**Table 1. Geometrical parameters**

| ML Layer | Material | Thickness (VIS) | | Thickness (NIR) | |
|---|---|---|---|---|---|
| Substrate | Fused Silica | | | | |
| 1 | TiO₂ | 10,0 nm | | 16,3 nm | |
| 2 | SiO₂ | 47,5 nm | | 77,7 nm | |
| 3 | TiO₂ | 15,0 nm | | 24,5 nm | |
| 4 | SiO₂ | 107,5 nm | | 175,9 nm | |
| 5 | SiO₂ | 100,0 nm | | 150,0 nm | |
| NS | Material | Height | Dbase | Dapex | Density |
| 6 | SiO₂ | 150 nm | 60nm | 50nm | 50 particles/µm² |

### Hydrophobic fluorosilane coating

The surface energy of the samples was modified by applying a fluorosilane coating. The fluorosilane used for this experiment was OPTOOL UF503 (Daikin) dissolved in NOVEC 7200 (3M) with a proportion of 1:1000. The mixture was stirred for 15 minutes before its use. The substrates were pre-treated with O₂ plasma with a plasma cleaner system (PVA TePla 300 SemiAuto Plasma Asher) in order to functionalize the surface and remove defects and pollutants. The samples were dip-coated during 3min and then cured at 50° for 2 hours in a convection oven. Finally, in order to remove the exceeding layers of the fluorosilane, the samples were ultrasonically cleaned in a NOVEC 7200 bath for 2min.

### Optical, morphological and wetting characterization

The optical transmission and reflection were measured in the wavelength ranges of 380-780nm for VIS and from 600-1550nm for NIR by using a UV-vis-NIR spectrophotometer (PerkingElmer Lambda 950). Reflection measurements at normal incidence were carried out with AOI of 6°. Scattering was characterized by measuring the haze using a Haze-meter (BYK-Gardner 4601 haze-gloss). The morphology of the surface was examined by a scanning electron microscope (FEG-SEM, Inspect F, FEI Systems) working from 2 to 5 kV accelerating voltage at 10mm distance. The wetting properties of the samples were determined with a drop shape analysis system (DSA-100, Krüs GmbH) by measuring the static and dynamic water CA. Different areas of each sample were examined and averaged.

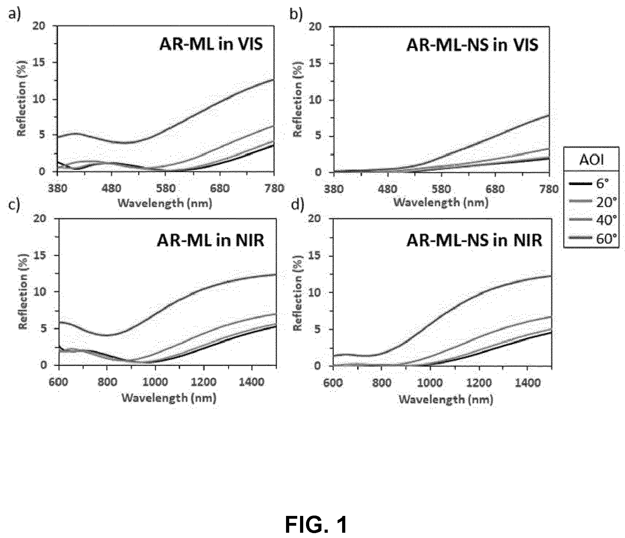

The FIG. 1 shows the optical comparison, transmission and reflection at normal incidence, between antireflective multilayer (AR-ML) and antireflective multilayer with nanostructures (AR-ML-NS) (150nm height nanopillar) optimized for the visible region (λ=550nm) (a) and the near-infrared region (λ=900nm) (b). Note that only one surface of the fused silica substrate was coated and nanostructured, so the residual reflection could at best be about 3.5%. In addition to provide superhydrophobicity and self-cleanliness, the NS reduces reflection and thus increases transmission (flat response) over a large wavelength range.

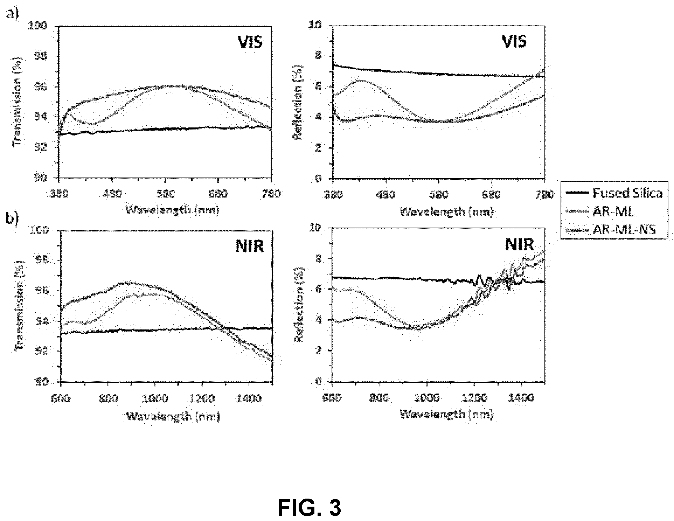

Both the AR-ML and AR-ML-NS samples were optically characterised by measuring their transmission and reflection, which are shown in FIG. 3 along with the bare fused silica substrate which serves as a reference. The AR-ML structure clearly show an AR effect, i.e. lower reflection and higher transmission, with respect to the bare substrate. With NS, the combined AR-ML-NS structure for both VIS and NIR ranges presents a flatter AR response, with lower reflectivity and higher transmission than those of the AR-ML counterpart. This is more evident for the VIS range as it was expected considering that the NS height is the same for both VIS and NIR while the wavelength nearly doubles.
Another important yet often neglected parameter for optical surfaces is the scattering which can be quantified by the haze parameter, that is the percentage of incident light diffused by the sample at an angle larger than 2.5°. It is known that NS, if not subwavelength, can cause scattering. In our case, we measured haze values of 0.13% and 0.03% for the AR-ML-NS and AR-ML surfaces, respectively, indicating very low scattering associated to NS.

Haze is measured in the VIS range, where our instrument operates. For the NIR, given that the NS geometry is similar and the wavelength much larger, the haze value and scattering should be even lower.

The self-cleaning capabilities are related to the wetting properties between a water droplet and the surface. Static and dynamic CA before and after the application of a low surface tension fluorosilane were measured. After fabrication, the AR-ML exhibited hydrophilic behaviour (CA<90°) while AR-ML-NS was superhydrophilic (CA<10°). After functionalizing with fluorosilane, the AR-ML became hydrophobic (CA = 115°) while AR-ML-NS reached SH state (CA>150°) with low sliding angle (6°) and low CA hysteresis (CAH<8°), which indicates a great water droplet roll-off effect. The results thus confirm that our initial design, that is 150 nm nanopillars are deep enough to reach SH.

### Mechanical resistance test

The durability of the proposed structure was studied using a crockmeter machine (M238BB Electronic Crockmeter, SDL ATLAS). The test emulates the rubbing action of a human finger providing reproducible results in order to study the wear of the samples after a certain number of cycles. The test follows the standards of the American Association of Textile Chemists and Colorists (AATCC) as test method 8 with a constant force of 9N over 2cm² surface.

After 50 passes, the SEM analysis revealed that the structure was preserved. This was also consistent with optical transmission measurements before and after crockmeter and with calculations showing that maximum tension is well below the breaking point of silica.

If much deeper NS are created, e.g. 400 instead of 150 nm, these may not pass such a mechanical test. 400 nm would be the height required for an AR-NS (without ML) operating in the NIR at around 900nm. This makes evident the benefit of the proposed concept, to combine NS and ML, to achieve AR, SH and mechanical resistance at the same time.

## Claims

**1.** An antireflective multilayer article with nanostructures on the top layer wherein the article comprising a substrate, at least two layers of materials with different refractive indices deposited on top of one another and nanostructures made of materials that have a refractive index equal to any of the refractive index of the material layers of the multilayer +/- 10%.

**2.** The article according claim 1 wherein the materials of the nanostructures have a refractive index equal to the refractive index of the top layer material +/- 10%.

**3.** The article according any of the claims 1 to 2 wherein the shape of the nanostructures is selected from: spherical, conical, spiral, cylindrical, tubular, flat, pillar, hollow or irregular.

**4.** The article according to claim 3 wherein the nanostructures are nanopillars.

**5.** The article according to claim 3 wherein the nanostructures are nanoholes.

**6.** The article according to claim 3, wherein the nanostructures are nanoparticles.

**6.** The article according to claim 4 or 5 wherein nanopillars density is comprised between 30 nanopillars per micron square to 70 nanopillars per micron square.

**7.** The article according to any of the claims 1 to 6 wherein the nanostructures are made of glass or ceramics or polymer materials.

**8.** The article according any of the claims 1 to 7 wherein the top layer of the article and the nanostructures are monolithic.

**9.** The article according any of the claims 1 to 7 wherein the nanostructures are covered with a low surface free energy coating, Υ ≤ 40 dynes/cm.

**10.** The article according claim 9 wherein the nanostructures are covered with a low surface free energy coating, Υ ≤ 20 dynes/cm.

**11.** A process for the preparation of the antireflective multilayer article with nanostructures according to any of the claims 1 to 10 that comprises:
a) providing a primary substrate;
b) forming at least two layers with different refractive indices deposited on top of one another by sputtering deposition to obtain a multilayer article;
c) providing a pattern of nanostructures on the top layer.

**12.** The process according claim 11 wherein the nanostructures are prepared using metal dewetting followed by etching or nano imprint techniques.

**13.** The process according claim 11 for the preparation of the antireflective multilayer article with nanostructures according to claim 8 wherein the step c) is carried out by depositing on the top of the multilayer article obtained in step b) a metal layer; generating metal nanoparticles as an etching mask in the metal layer deposited, by means of thermal annealing process (RTA); dry etching the metal nanoparticles to generate the nanostructures and chemically removing the residual mask of metal.

**14.** The process according any of the claims 11 to 13 wherein after the step c) there is a step d) of applying a fluorosilane or an alkylsilane SAM coating.

**15.** Use of the antireflective multilayer article with nanostructures according any of the claims 1 to 10 for photovoltaic cells, laser device, display screens and light detection and ranging (LIDAR) system.
